Europäisches Patentamt

**European Patent Office**

**Office européen des brevets**

(19)

(11) Veröffentlichungsnummer: **0 255 848**
**B1**

(12) **EUROPÄISCHE PATENTSCHRIFT**

(45) Veröffentlichungstag der Patentschrift:
**27.12.89**

(21) Anmeldenummer: **86890226.3**

(22) Anmeldetag: **08.08.86**

(51) Int. Cl.⁴: **G02B 6/44**

(54) **Lichtwellenleiterkabel.**

(43) Veröffentlichungstag der Anmeldung:
**17.02.88 Patentblatt 88/7**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**EP-A- 0 136 913**
**DE-A- 3 324 597**
**GB-A- 1 577 323**
**GB-A- 2 064 163**
**GB-A- 2 085 188**
**GB-A- 2 103 822**
**GB-A- 2 138 168**
**GB-A- 2 159 296**

(73) Patentinhaber: **KABEL- und DRAHTWERKE Aktiengesellschaft, Oswaldgasse 33, A-1121 Wien(AT)**

(72) Erfinder: **Faltin, Leopold, Dipl.-Ing. Dr., Wilhelminenstrasse 147/1, A-1160 Wien(AT)**
Erfinder: **Novak, Gerhard, Ing., Auhofstrasse 64/1/5, A-1130 Wien(AT)**

(74) Vertreter: **Krause, Peter, Penzinger Strasse 76, A-1141 Wien(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein hochtemperaturbeständiges optisches Kabel.

Dieses Kabel enthält entweder ausschließlich oder neben anderen Übertragungselementen eine Seele mit Lichtwellenleitern. Es ist für Anwendungen vorgesehen, bei denen z.B. durch Brandeinwirkung Temperaturen bis zu 800° (im allgemeinen, aber nicht unbedingt bei gleichzeitiger Beflammung) auftreten können. Bei solchen Hochtemperaturbeanspruchungen ist es erwünscht, daß das Kabel während einer beschränkten Zeit funktionsfähig ist, danach kann es zu Ausfällen kommen. Es ist davon auszugehen, daß das Kabel nach einer einzigen derartigen Beanspruchung ausgetauscht wird, gleichgültig wie lange die Beanspruchung tatsächlich gedauert hat.

Der Begriff Seele umfaßt im hier verwendeten Sinn alle durch Verseilung, Bewicklung und/oder Umflechtung zu einem Verbund zusammengefaßten Elemente wie Lichtwellen- und andere Leiter, Zug-, Stütz- oder Blindelemente sowie Bewicklungen.

Lichtwellenleiterkabel und Verbundkonstruktionen, die sowohl Lichtwellenleiter, als auch konventionelle Nachrichten- und/oder Energieübertragungselemente enthalten, sind bekannt.

Von den bekannten Lichtwellenleiterkabelkonstruktionen für die nachstehenden Ausführungen ist insbesondere das sogenannte Hohlader-Kabel von Bedeutung. Durch seinen Aufbau, nämlich die Einbettung der Lichtwellenleiter in mit weicher Masse gefüllten Röhrchen und einem radialen Bewegungsspielraum der Lichtwellenleiter in diesem Röhrchen, wird über Temperaturbereich von etwa 100°C und über Dehnungsspielräume von etwa 0,5% ein Betrieb ohne Dämpfungsänderungen ermöglicht.

Bekannt ist ferner eine Kabelkonstruktion, bei der die oben erwähnten Hohladern einzeln mit Glimmerband umwickelt sind, bei der weiters die über ein zentrales Element verseilten Hohladern gemeinsam mit einem hitzebeständigen Band umwickelt sind und bei der die so aufgebaute Seele schließlich mit einem Mantel aus einem besonderen Kunststoff umhüllt ist. Dieser Kunststoff hat die Eigenschaft, sich bei Temperaturen über 500°C in ein rein anorganisches, sehr gut wärmeisolierendes Material umzuwandeln. Dieser Umwandlung geht die Abscheidung von Kristallwasser voraus, wodurch Wärme absorbiert wird. Diese Eigenschaften verzögern das Eindringen der Wärme ins Innere der Seele, wodurch diese geschützt wird. Hat die Seele schließlich doch Temperaturen über 500°C erreicht, dann sintert die Glimmerbewicklung zu einem kompakten Röhrchen zusammen und ersetzt die inzwischen möglicherweise verdampfte oder verbrannte, jedenfalls aber als Lichtwellenleiterschutz unbrauchbar gewordene organische Hohladerhülle. Auf diese Weise wird ein Funktionserhalt bis zu drei Stunden bei etwa 800°C erreicht. Ein dieser Kabelkonstruktion nahe kommendes Kabel ist beispielweise aus GB-A 2 138 168 bekannt.

Ein Nachteil dieser Konstruktion ist die prinzipiell immer erforderliche Glimmerbewicklung der Hohladern, die einen eigenen Arbeitsgang bedingt. In Anbetracht der üblichen geringen Durchmesser und mechanischen Stabilität der Adern ist dieser Arbeitsgang zudem als besonders kritisch anzusehen. Einen weiteren Nachteil stellt die Notwendigkeit der thermisch isolierenden Umhüllung der Seele dar, deren Eigenschaften noch einen weiteren äußeren Kabelmantel aus flammwidrigem Material erforderlich machen und damit Durchmesser und Gewicht des Kabels vergrößern.

Bekannt ist schließlich, daß acrylbeschichtete Lichtwellenleiter hinsichtlich ihres Hochtemperaturverhaltens (Dämpfung und Festigkeit) günstiger sind als solche, die mit Metall oder mit Silikonkautschuk beschichtet sind.

Darüberhinaus ist aus der GB-A 1 577 323 ein optisches Kabel mit einer kammerartigen Struktur bekannt, die aus über einem zentralen Zugelement abwechselnd verseilten Lichtwellenleitereinheiten und Blindelementen, sowie aus einer Seelenbewicklung besteht. Abgesehen davon, daß dieses Kabel keine Lichtwellenleiter-Hohladern aufweist, ist eine Beständigkeit gegen hohe Temperaturen nicht gegeben.

Ferner ist beispielsweise aus der GB-A 2 064 163 ein optisches Kabel, das Lichtwellenleiter-Hohladern aufweist, bekannt. Auch dieses Kabel ist Hochtemperaturbeanspruchungen nicht gewachsen. Außerdem weist es keine Blindelemente auf.

Der Erfindung liegt die Aufgabe zugrunde, die in der Kabelseele enthaltenen Lichtwellenleiter so zu schützen, daß sie bei Hitzeeinwirkung, z.B. bei Brand, über Zeiträume von mindestens 20 min. voll funktionsfähig bleiben, diesen Schutz aber ohne erhöhte Fertigungsdauer, zusätzliche Fertigungseinrichtungen und/oder gesteigertes Fertigungsrisiko erreichen.

Bei dem hochtemperaturbeständigem optischen Kabel, gemäß der Erfindung sind über einem zentralen Zug- und Stützelement in Umfangsrichtung abwechselnd Lichtwellenleiter-Hohladern und Blindelemente verseilt, und über diesem Verseilverband ist eine gasdurchlässige Seelenbewicklung angeordnet, so daß die Lichtwellenleiter-Hohladern in einer kammerartigen Struktur eingebettet sind, wobei das zentrale Zug- und Stützelement, die Blindelemente und die gasdurchlässige Seelenbewicklung ausschließlich aus unbrennbaren und hochtemperaturbeständigen Materialien bestehen, so daß diese so unbrennbar und hochtemperaturbeständig gemachte kammerartige Stuktur bei Hitzeeinwirkung noch ermöglicht, den mechanischen Schutz der Lichtwellenleiter, und demzufolge die Fuktionsfähigkeit des Kabel über eine beschränkte Zeit aufrecht zu erhalten.

Mit dierser Erfindung ist es erstmals möglich, ein Kabel zu schaffen, das eine Funktionsfähigkeit entsprechend den in der Aufgabenstellung aufgezeigten Bedingungen gewährleistet und das keinen höheren Fertigungsaufwand erfordert.

Durch das Aufbringen der über dem Verseilverband vorgesehenen gasdurchlässigen Seelenbewicklung ergibt sich eine kammerartige Struktur. Im Zusammenwirken mit der erfindungsgemäßen Materialwahl wird dadurch erreicht, daß bei einer Hochtemperaturbeanspruchung der für die Lichtwellenleiter erforderliche mechanische Schutz nicht verloren geht, selbst wenn die Hohladerhüllen bereits verbrannnt oder verdampft sind.

Gemäß einem weiteren Merkmal der Erfindung besteht das zentrale Zug- und Stützelement aus einem Material mit geringer Wärmedehnung, vorzugsweise aus Stahl und ist mit einem metallenen Korrosionsschutz versehen. Diese Schutzüberzüge können Zink, Chrom, Nickel od. dgl. sein.

Gemäß einer besonderen Ausgestaltung ist das zentrale Zug- und Stützelement als Seil Uasgebildet. Damit wird die Flexibilität erhöht.

Eine weitere erfindungsgemäße Ausgestaltung besteht darin, daß die Blindelemente aus Glasseidenfasern geflochten sind. Dadurch erhält man ohne jede Tränkung mit Binde- oder Imprägniermitteln hochflexible Blindelemente mit sehr guter Querstabilität, die bis zum Schmelzen des Glases erhalten bleibt. Die kammerartige Struktur wird somit von derartigen Blindelementen bis zu diesen Temperaturen gestützt.

Nach einem weiteren Merkmal der Erfindung ist der Durchmesser der Blindelemente größer als der Durchmesser der Lichtwellenleiter-Hohladern. Dadurch übt die kammerartige Struktur auch auf die sich in der Hitze ausdehnenden Hohladern keinen Druck aus und die Beweglichkeit der Lichtwellenleiter in den Hohladerhüllen bleibt erhalten.

Einem besonderen Erfindungsvorschlag zufolge ist die Hohladerhülle und gegebenenfalls auch die Hohlader-Füllmasse aus organischen Stoffen aufgebaut, die völlig oder zumindest weitgehend rückstandsfrei verbrennen und/oder verdampfen. Geringfügige anorganische Beimengungen wie sie etwa zur Thixotropierung von Aderfüllmassen eingesetzt werden, sind dabei ohne Belang. Als Aderhüllenmaterial eignen sich beispielsweise besonders thermoplastisch verarbeitbare Polyamide and Polyester, als Aderfüllmassen beispielsweise jene, die auf Paraffinölbasis aufgebaut sind. Durch diese Maßnahme wird erreicht, daß die Lichtwellenleiter bei einer Hochtemperaturbeanspruchung keinen zusätzlichen mechanischen Beanspruchungen durch umgebendes verschmortes, verkohltes und/oder zusammengesintertes Hüllen- bzw. Füllmaterial ausgesetzt werden.

Nach einem weiteren Merkmal der Erfindung weist die Hohladerhülle eine Wanddicke auf, die beim Verbrennen und/oder Verdampfen der Hohladerhülle einen zusätzlichen Radialspielraum ergibt, so daß dieser Radialspielraum den Dehnungsspielraum auf einen Wert erhöht, der mindestens gleich der Wärmedehnung des zentralen Zug- und Stützelementes bei der höchsten auftretenden Temperatur ist. Auf diese Weise ist es möglich, den Dehnungsspielraum des Kabels von den für den Einsatz bei Normaltemperaturen üblichen (und dafür auch völlig ausreichenden) 0.3 bis 0.5 % auf 0.8 bis 1.0 % zu erhöhen, um die bei Verwendung von gewöhnlichem Stahl als Zentralelement bei ca 800°C auftretenden Wärmedehnungen ohne Zusatzdämpfungen aufnehmen zu können.

Gemäß einer besonderen Ausgestaltung der Erfindung ist die gasdurchlässige Seelenbewicklung mit einem Glasseidengewebeband ausgeführt, wobei die Gasdurchlässigkeit vorzugsweise durch besonders lockere Webart, durch geringe Banddicke und/oder durch Wicklung mit nur geringer Überlappung oder sogar mit Fuge unterstützt ist.

Nach einem weiteren Merkmal der Erfindung weist das Band zur Seelenbewicklung eine Sintertemperatur auf, die unter der höchsten auftretenden Temperatur liegt, so daß sich die zunächst gasdurchlässige Bewicklung beim Überschreiten der Sintertemperatur in eine dichte Hülle umwandelt.

Durch die Wahl eines Bandes zur Seelenbewicklung mit Sintertemperaturen beispielsweise im Bereich um 500° C wird erreicht, daß im Zuge der fortschreitenden Erwärmung die Bewicklung zwar zunächst gasdurchlässig ist und somit das leichte Austreten der Verbrennungsgase und/oder Dämpfe der Aderhüllen ermöglicht, daß sich aber in weiterer Folge die Bewicklung durch Zusammensintern in eine dichte Hülle umwandelt und damit der weitere Zutritt von Gasen und Dämpfen, die für die Lichtwellenleiter schädlich sein könnten, verhindert oder wenigstens erschwert wird.

Alle bisher beschriebenen Erfindungsvorschläge zielen darauf ab, die Hochtemperaturbeständigkeit der Kabelseele an sich zu gewährleisten bzw. weiter zu verbessern. Dadurch wird die Seele trotz ihrer speziellen Hochtemperatureigenschaften zu einem universellen Aufbauelement für Kabel, die noch anderen Anforderungen zu genügen haben.

Gemäß einem weiteren Merkmal der Erfindung sind über der Seelenbewicklung zur Erhöhung der Zugfestigkeit hochfeste Fasern aufgeseilt, aufgesponnen oder aufgeflochten, beispielsweise Glasfaserbündel (Glasrovings).

Eine weitere erfindungsgemäße Ausgestaltung besteht darin, daß die Seele (gegebenenfalls auch über dem zusätzlichen Zugelement) mit einem gewickelten oder längslaufenden Metall- oder Metall-Kunststoff-Verbundband als Wasserdampfsperre bzw. Nagetierschutz bedeckt ist.

Schließlich ist gemäß einer weiteren Ausgestaltung der Erfindung die Seele (gegebenenfalls mit zusätzlichem Zugelement und/oder Wasserdampfsperre bzw. Nagetierschutz) mit mindestens einem Mantel aus thermoplastischem Kunststoff, vorzugsweise mit flammwidrigen Eigenschaften, umhüllt. Mit einer derartigen Umhüllung kann ein flammwidriges Kabel mit garantiertem Funktionserhalt realisiert werden, das auch die bei Verlegung und Montage sowie gegen die unter normalen Betriebsbedingungen auftretenden Beanspruchungen und Einflüsse geschützt ist.

Die Vorteile der Erfindung sind wie folgt zusammenzufassen:

Mit der Erfindung können flammwidrige Lichtwellenleiterkabel mit garantiertem Funktionserhalt d.h. Hochtemperaturbeständigkeit über mindestens 20 min hergestellt werden, ohne daß - verglichen mit gewöhnlichen Lichtwellenleiterkabeln - ein erhöhter Fertigungsaufwand in Kauf genommen werden müßte.

Erfindungsgemäß basiert die Hochtemperaturbeständigkeit des Kabels alleine auf Eigenschaften, die die Seele selbst schon aufweist. Die Seele stellt somit ein universelles Aufbauelement für Kabel dar, die darüber hinaus noch verschiedenen anderen Anforderungen zu genügen haben.

Bei Ausführungen mit (zumindest annähernd) rückstandsfrei verbrennenden und/oder verdampfenden Hohladerhüllen ist eine klare Trennung zwischen Dehnungsspielraum im kalten bzw. im heißben Zustand möglich. Das ermöglicht eine optimale Anpassung der Konstruktion an unterschiedlichste Anforderungsprofile.

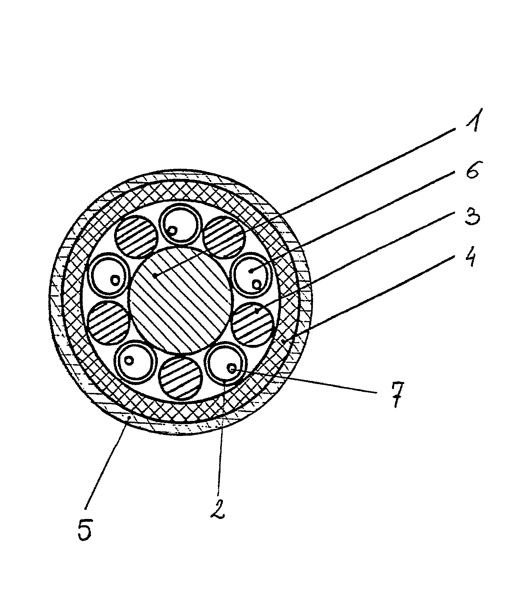

Die Erfindung wird an Hand eines in der Zeichnung dargestellten Ausführungsbeispieles näher erläutert:

Über dem zentralen Zug- und Stützelement 1 sind Lichtwellenleiter-Hohladern 2 mit Blindelementen 3, derart verseilt, daß zwischen benachbarten Hohladern 2 immer zumindest ein derartiges Blindelement 3 zu liegen kommt.

Über diesem Verseilverband ist die gasdurchlässige Seelenbewicklung 4 aufgebracht und dieses als Seele definierte Gebilde ist mit einem Mantel 5 aus thermoplastischem Kunststoff umhüllt. Zwischen diesem Mantel 5 und der Seelenbewicklung 4 könnte auch ein zusätzliches Zugelement oder eine Wasserdampfsperre oder ein Nagetierschutz vorgesehen sein.

Im Zusammenwirken mit der über dem Verseilverband aufgebrachten Seelenbewicklung 4 ergibt sich für die Hohladern 2 eine kammerartige Strukter die aus dem Zug- und Stützelement 1, den Blindelementen 3 und der Seelenbewicklung 4 gebildet ist Das Zug- und Stützelement 1, die Blindelemente 3 und die Seelenbewicklung 4 sind ausschließlich aus unbrennbaren und hochtemperaturbeständigen Materialien hergestellt.

Die Hülle der Hohladern 2 und auch gegebenenfalls die Füllmasse 6 in den Hohladern 2 besteht aus solchen organischen Stoffen, die völlig oder zumindest weitgehend rückstandfrei verbrennen bzw. verdampfen. In der Füllmasse 6 der Hohladern 2 ist der eigentliche Lichtwellenleiter 7 eingebettet.

Bei großer Hitzeeinwirkung verbrennt oder verdampft erst die Hülle und die Füllung 6 der Hohladern 2. Durch die gasdurchlässige Seelenbewicklung 4 können die Dämpfe entweichen. Bei Überschreiten der Sintertemperatur wandelt sich die Seelenbewicklung 4 in eine dichte Hülle um. Für den in der kammerartigen Struktur praktisch lose liegenden Lichtwellenleiter 7 ist der mechanische Schutz nach wie vor gegeben.

## Patentansprüche

1. Hochtemperaturbeständiges optisches Kabel, bei dem über einem zentralen Zug- und Stützelement (1) in Umfngsrichtung abwechselnd Lichtwellenleiter-Hohladern (2) und Blindelemente (3) verseilt sind, und über diesem Verseilverband (1, 2, 3) eine gasdurchlässige Seelenbewicklung (4) angeordnet ist, so daß die Lichtwellenleiter-Hohladern in einer kammerartigen Struktur (1, 3, 4) eingebettet sind, wobei das zentrale Zug- und Stützelement (1), die Blindelemente (3) und die gasdurchlässige Seelenbewicklung (4) ausschließlich aus unbrennbaren und hochtemperaturbeständigen Materialien bestehen, so daß diese so unbrennbar und hochtemperaturbeständig gemachte kammerartige Stuktur (1, 3, 4) bei Hitzeeinwirkung noch ermöglicht, den mechanischen Schutz der Lichtwellenleiter (7), und demzufolge die Funktionsfähigkeit des Kabels über eine beschränkte Zeit aufrecht zu erhalten.

2. Kabel nach Anspruch 1, dadurch gekennzeichnet, daß das zentrale Zug- und Stützelement (1) aus einem Material mit geringer Wärmedehnung, vorzugsweise aus Stahl, besteht und mit einem metallenen Korrosionsschutzüberzug versehen ist.

3. Kabel nach Anspruch 2, dadurch gekennzeichnet, daß das zentrale Zug- und Stützelement (1) als Seil ausgebildet ist.

4. Kabel nach mindestens einem der Ansprüche 1 bis 3, dadurch gekennzeichnet, daß die Blindelemente (3) aus Glaseidenfasern (Glaseidenrovings) geflochten sind.

5. Kabel nach mindestens einem der Ansprüche 1 bis 4, dadurch gekennzeichnet, daß der Durchmesser der Blindelemente (3) größer ist, als der Durchmesser der Lichtwellenleite-Hohladern (2).

6. Kabel nach mindestens einem der Ansprüche 1 bis 5, dadurch gekennzeichnet, daß die Hohladerhülle und gegebenenfalls auch die Hohlader-Füllmasse aus organischen Stoffen aufgebaut ist, die völlig oder weitgehend rückstandsfrei verbrennen und/oder verdampfen.

7. Kabel nach Anspruch 6, dadurch gekennzeichnet, daß die Hohladerhülle eine Wanddicke aufweist, die beim Verbrennen und/oder Verdampfen der Hohladerhülle einen zusätzlichen Radialspielraum ergibt, so daß dieser Radialspielrum den Dehnungsspielraum auf einen Wert erhöht, der mindestens gleich der Wärmedehnung des zentralen Zug- und Stützelementes (1) bei der höchsten auftretenden Temperatur ist.

8. Kabel nach mindestens einem der Ansprüche 1 bis 7, dadurch gekennzeichnet, daß die gasdurchlässige Seelenbewicklung (4) mittels Glaseidengewebeband ausgeführt ist, wobei die Gasdurchlässigkeit vorzugsweise durch besonders lockere Webart, durch geringe Banddicke und/oder durch Wicklug mit nur geringer Überlappung oder sogar mit Fuge unterstützt ist.

9. Kabel nach mindestens einem der Ansprüche 1 bis 8, dadurch gekennzeichnet, daß das Band zur Seelenbewicklung (4) eine Sintertemperatur aufweist, die unter der höchsten auftretenden Temperatur liegt, so daß sich die zunächst gasdurchlässige Bewicklung beim Überschreiten der Sintertemperatur in eine dichte Hülle umwandelt.

10. Kabel nach mindestens einem der Ansprüche 1 bis 9, dadurch gekennzeichnet, daß über der Seelenbewicklung (4) hochfeste Fasern aufgeseilt, aufgesponnen oder aufgeflochten sind, beispielsweise Glaseidenfasern (Glaseidenrovings).

11. Kabel nach mindestens einem der Ansprüche 1 bis 10, dadurch gekennzeichnet, daß die Seele (1, 2, 3, 4) mit einem gewickelten oder längslaufenden Metall- oder Metall-Kunststoff-Verbundband als Wasserdampfsperre bzw. Nagnetierschutz bedeckt ist.

12. Kabel nach mindestens einem der Ansprüche 1 bis 11, dadurch gekennzeichnet, daß die Seele (1, 2, 3, 4) mit mindestens einem Mantel aus thermoplastischem Kunststoff, vorzugsweise mit flammwidrigen Eigenschaften, umüllt ist.

## Claims

1. High temperature reajalanl optical fibre cable wherein, in circumferential direction, around the central tension and support element thereof hollow core light guides (2) and blind elements (3) are stranded, and a gas permeable core winding (4) is arranged over this stranding, so that the hollow core light guides are embedded in a chamber-like structure, wherein the central tension an support element (1), the blind elements (3) and the gas permeable core winding (4) are made entirely from non-inflammable and high-temperature resistant materials, so that the chamberlike structure (1, 3, 4), made non-inflammable and high-temperature resistant in this way, still renders it possible to maintain the mechanical protection of the light guides (7) under heat influence, and therewith the operability of the cable over a limited period.

2. Cable according to claim 1, characterised in that the central tension and support element (1) is formed from a material having a small thermal espansion, preferably steel, and is provided with a metallic coating for protection against corrosion.

3. Cable according to claim 2, characterised in that the central tension ans support element (1) is in form of a rope.

4. Cable according to at least one of the claims 1 to 3, characterised in that the blind elements (3) are intermoven from fibre glass strands (fibre glass rovings).

5. Cable according to at least one of the claims 1 to 4, characterised in that the diameter of the blind elements (3) is greater than the diameter of the hollow core light guides (2).

6. Cable according to at least one of the claims 1 to 5, characterised in that the hollow core sheath, and, if desired the filling mass of the hollow core are made from an organic material, which burn and/or evaporate entirely or largely without residue.

7. Cable according to claim 6, charaterised in that that the hollow core sheath has a wall thickness, which results in an additional radial clearance during the burning and/or evaporation, so that this radial clearance increases the expansion clearance to a value, which is at least the same as the thermal expansion of the central tension and support element (1) at the highest temperature occurring.

8. Cable according to at least one of the claims 1 to 7, characterised in that the gas-permeable core winding (4) is manufactured by means of fibre glass fabric tape wherein the gas permeability is supported preferably by especially loose type of weaving, by small tape thicknes an/or by winding having only slight overlap or even a junction.

9. Cable according to at least one of the claims 1 to 8, characterised in that the tape for winding the core (4) comprises a sinter temperature which is below the highest temperature occurring so that the initially gas permeable winding changes to a compact sheath when the sinter temperature is exceeded.

10. Cable according to at least one of the claims 1 to 9, characterised in that highly rigid fibres are stranded, spun, or interwoven, on top of the core winding (4), as for example fibre glass strands (fibre glass rovings).

11. Cable according to at least one of the claims 1 to 10, characterised in that the core (1, 2, 3, 4) is covered with a wound or longitudinally running metal- or metal-plastica composition as a steam barrier or protection against rodents.

12. Cable according to at least one of the claims 1 to 11, characterised in that the core (1, 2, 3, 4) is embedded in at least one coat made form a thermoplastics, preferably flame-proof material.

## Revendications

1. Câble optique à heute résistance thermique, dans lequel sont câblés, sur un élément central de traction et de support (1), des brins creux pour fibres optiques (2) et des faux éléments (3), alternant selon la périphérie, et, sur ce système de câblage (1, 2, 3) est disposée une enveloppe d'âme (4) perméable aux gaz, de telle sorte que les brins creux pour fibres optiques sont noyés dans une structure de type chambre (1, 3, 4), l'élément central de traction et de support (1), les faux éléments (3) et l'enveloppe d'âme (4) perméable aux gaz se composant exclusivement de matériaux non-inflammables et à haute résistance thermique, de telle sorte que cette structure de type chambre (1, 3, 4) ainsi rendue non-inflammable et à haute résistance thermique permette encore, sous l'action de la chaleur, de maintenir la protection mécanique des fibres optiques (7), et, par conséquent, la capacité de fonctionnement du câble pendant un temps limité.

2. Câble selon la revendication 1, caractérisé par le faitque l'élément central de traction et de support (1) est réalisé en un matériau présentant une faible dilatation thermique, de préférence en acier, et est doté d'un revêtement de protection contre la corrosion des métaux.

3. Câble selon la revendication 2, caractérisé par le fait que l'élément central de traction et de support (1) est réalisé sous la forme d'un câble.

4. Câble selon au moins l'une des revendications 1 à 3, caractérisé par le fait que les faux éléments (3) sont tressés à partir de fibres de verre (stratifils de verre textile).

5. Câble selon au moins l'une des revendications 1 à 4, caractérisé par le fait que le diamètre des faux éléments (3) est supérieur au diamètre des brins creux pour fibres optiques (2).

6. Câble selon au moins l'une des revendications 1 à 5, caractérisé par le fait que la gaine des brins creux et éventuellement également la matière de remplissage des brins creux sont formées de substances organiques, qui brûlent et/ou s'évaporent totalement ou pratiquement sans laisse de résidu.

7. Câble selon la revendication 6, caractérisé par le fait que la gaine des brins creux présente une épaisseur de paroi qui, lors de la combustion et/ou de l'évaporation de la gaine des bris creux, donne un jeu radial additionnel, de telle sorte que ce jeu radial augmente le jeu de dilatation d'une valeur qui est au moins égale à la dilatation thermique de l'élément central de traction et de support (1) pour la température la plus élevée qui se présente.

8. Câble selon au moins l'une des revendications 1 à 7, caractérisé par le fait que l'enveloppe d'âme (4) perméable aux gaz est réalisée au moyen d'une bande de tissu de verre, la perméabilité aux gaz étant maintenue de préférence par un mode de tissage particulièrement lâche, par une faible épaisseur de bande et/ou par enroulement avec recouvrement réduit seulement ou même avec jointure.

9. Câble selon au moins l'une des revendications 1 à 8, caractérisé par le fait que la bande pour l'enveloppe d'âme (4) présente une température de frittage qui se situe au-dessous de la température la plus élevée qui se présente, de telle sorte que l'enveloppe, tout d'abord perméable aux gaz, se transforme, lors d'un dépassement de la température de frittage, en une gaine épaisse.

10. Câble selon au moins l'une des revendications 1 à 9, caractérisé par le fait que sur l'enveloppe d'âme (4), des fibres à haute résistance sont câblées, filées ou tressées, par exemple des fibres de verres (stratifils de verre textile).

11. Câble selon au moins l'une des revendications 1 à 10, caractérisé par le fait que l'âme (1, 2, 3, 4) est recouverte par une bande de liaison en métal ou en métal-matière plastique enroulée ou s'étendant longitudinalement, en tant que barrière vis-à-vis de l'humidité ou protection contre les rongeurs.

12. Câble selon au moins l'une des revendications 1 à 11, caractérisé par le fait que l'âme (1, 2, 3, 4) est enveloppée par au moins une gaine en matière thermoplastique, de préférence présentant des propriétés ignifuges.